# EUROPEAN PATENT APPLICATION

(11) **EP 2 019 516 A1**
(43) Date of publication of application: **28.01.2009**
(21) Application number: 07721386.6
(22) Date of filing: 08.06.2007
(51) Int. Cl.: H04L 12/28

(54) **MULTI-QUEUE FLOW CONTROL METHOD, SYSTEM AND EQUIPMENT**

(30) Priority: 14.07.2006 CN 200610099403
(71) Applicant: Huawei Technologies Co., Ltd., Longgang District, Shenzhen, Guangdong 518129 (CN)
(72) Inventor: CUI, Xiumei, Guangdong 518129 (CN)
(74) Representative: Casalonga, Axel
(86) International application number: PCT/CN2007/001813
(87) International publication number: WO 2008/009199

(57) **Abstract**

A multi-queue flow control method, a multi-queue flow control system, and a multi-queue flow control apparatus, applicable to a full-duplex Ethernet, are suitable for customizing a flow control frame reflecting buffer statuses of a plurality of queues. A receiving device informs a current buffer status of each queue of itself to a sending device by sending a flow control frame to the sending device, and the sending device stops sending data frames to an overflowing queue according to the flow control frame. Therefore, the multi-queue flow control in the full-duplex Ethernet is realized.

## Description

The application claims the benefit of priority to China Patent Application No. 200610099403.1, filed on July 14, 2006, and entitled "*Multi-queue Flow Control Method*", which is incorporated herein by reference in its entirety.

### BACKGROUND OF THE INVENTION

### Field of the Technology

The present invention relates to a flow control technology, and more particularly to a multi-queue flow control method, system, and apparatus.

### Background of the Invention

In the prior art, a flow control in a full-duplex Ethernet is realized by a PAUSE frame. The PAUSE frame is one type of media access control (MAC) control frame. When a temporary burst of the data flow occurs and may result in a buffer overflow, the PAUSE frame can avoid a frame dropping phenomenon for the device. A receiving device sends a PAUSE frame to a sending device on an opposite end of a full-duplex link, so as to prevent the internal buffer of the receiving device itself from overflowing. After receiving the PAUSE frame, the sending device on the opposite end stops sending the data frame according to the PAUSE frame, so that the receiving device has more processing time, thereby reducing the congestion in the buffer of the receiving device itself.

The PAUSE frame can realize a simple flow control operation in a "stop-start" manner. If a certain device intends to block a data frame, it may send a PAUSE frame with a certain parameter. The parameter specifies a pause time interval before a device on the opposite end in the full-duplex link resumes sending the data. Once receiving the PAUSE frame, the device on the opposite end stops sending data frames within the specified time interval. After the pause time has elapsed, the device on the opposite end resumes sending the data frame. The PAUSE frame may be used to control the transmission of data frames, but cannot affect the transmission of MAC control frames, for example, without affecting a PAUSE frame sent by the opposite end. As for a device that has already sent the PAUSE frame, it may further send a PAUSE frame with a parameter of 0, so as to cancel the residual pause time. The device for sending data uses the newly-received PAUSE frame to replace the currently-executed PAUSE frame, and operates according to the newly-received PAUSE frame. Similarly, as for the device that has already sent the PAUSE frame, it may further send another PAUSE frame with a non-zero time parameter to prolong the pause time, before the pause time of the previous PAUSE frame is out.

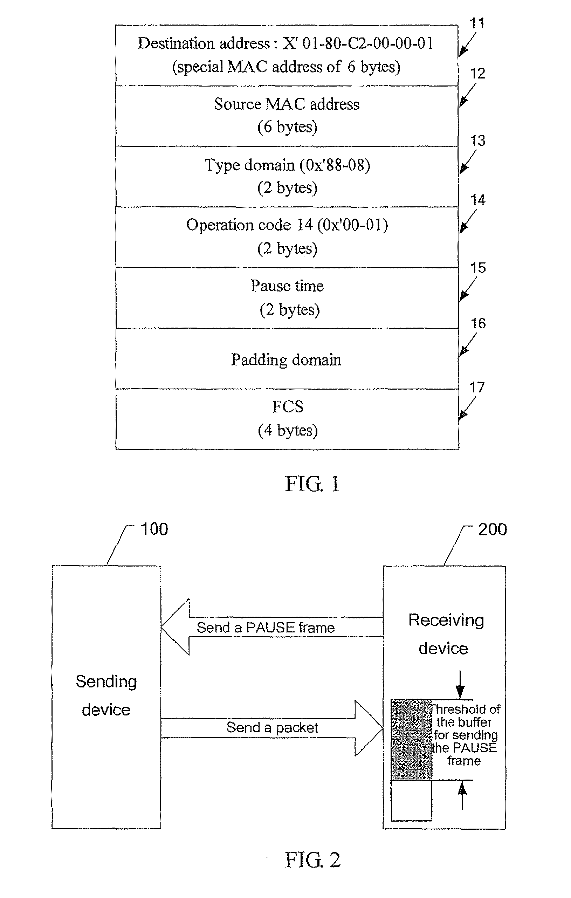

FIG. 1 is a schematic view of a PAUSE frame format in the prior art. Referring to FIG. 1, a destination address 11 is a unique multicast address, i.e., X' 01-80-C2-00-00-01, reserved for the PAUSE frame; a source MAC address 12 is a unicast address of a device that sends the PAUSE frame; a type domain 13 is a reserved value, i.e., 0x'88-08, used by all the MAC control frames; and an operation code 14 is 0x'00-01. The PAUSE frame further includes a parameter called a pause time 15, a padding domain 16, and a frame check sequence 17 (FCS). The parameter 15 is an unsigned integer value of 2 bytes, which represents a time length during which the PAUSE frame receiving end stops sending data frames as requested by the PAUSE frame sending end. The time measurement of the pause time takes a time of 512 bits as an increment, that is, the actual pause time of the PAUSE frame receiving end is equal to a product obtained by multiplying the pause time by a time required for transferring 512 bits at a current data rate.

FIG 2 is a schematic view of a flow control method using a PAUSE frame in the prior art. Referring to FIG 2, the flow control of a full-duplex Ethernet may be realized by sending a PAUSE frame to a device on the opposite end. A sending device 100 sends a data frame to a receiving device 200. When the data frame received by the receiving device 200 exceeds a flow that can be processed by itself, that is, the buffer reaches a certain back pressure threshold, the receiving device 200 sends a PAUSE frame through a channel in which the data is sent to the sending device 100. Meanwhile, the residual buffer bits are divided by 512 to act as a pause time parameter for the PAUSE frame, so that the sending device 100 pauses sending data frames to the receiving device 200, thereby preventing the buffer of the receiving device 200 from overflowing.

Under many situations, the Ethernet interface is required to bear data frames of various services, for example, both voice and data services, and when it is required to ensure the service quality of a high priority service, it is necessary to perform a multi-queue flow control.

During the process of implementing the present invention, it is found by the inventor through researches that, in the prior art, the PAUSE frame can only reflect the flow control information of the whole interface, but cannot respectively reflect the flow control information of a plurality of queues. When the Ethernet interface is adapted to send data frames to a plurality of queues, if the flow control is performed merely through the PAUSE frame, it is possible to result in the queue congestion. That is, when the buffer of only one of n (n>1) queues in the receiving device is about to be used-up, the receiving device sends a PAUSE frame, and as a result, not only the service of a certain queue initiating the transmission of the PAUSE frame is stopped, but the transmission of the services of the other queues with sufficient buffers is also stopped. Therefore, the flow control mechanism based on the PAUSE frame is not suitable for the multi-queue flow control.

### SUMMARY OF THE INVENTION

Embodiments of the present invention provide a multi-queue flow control method, a multi-queue flow control system, and multi-queue flow control apparatus, which are capable of realizing a flow control for a plurality of queues in a full-duplex Ethernet.

In embodiments of the present invention, technical solutions are provided as follows.

A multi-queue flow control method includes the following steps.

A receiving device sends a flow control frame including buffer status information of each queue to a sending device.

The sending device updates buffer status information of each queue stored in the sending device, after receiving the flow control frame.

The sending device queries buffer status information of each queue before sending a data frames, and continues to send data frames to the corresponding queue with a buffer status meeting a requirement, and stops sending data frames to the corresponding queue with a buffer status not meeting the requirement.

A multi-queue flow control method includes: receiving a flow control frame including buffer status information of each queue; updating the buffer status information of each queue according to the flow control frame; querying the buffer status information of each queue before sending data frames, and continuing to send data frames to the corresponding queue with a buffer status meeting a requirement, and stopping sending data frames to the corresponding queue with a buffer status not meeting the requirement.

A multi-queue flow control method on a data frame receiving side includes: receiving a data frame; updating buffer status information of each queue according to the received data frame and a processed data frame situation; and sending a flow control frame including the buffer status information of each queue.

An apparatus with a multi-queue flow control function includes a first receiving unit, a first updating unit, a first querying unit, and a first sending unit.

The first receiving unit is adapted to receive a flow control frame including buffer status information of each queue.

The first updating unit is adapted to update buffer status information of each queue according to the flow control frame.

The first querying unit is adapted to query the buffer status information of each queue before a data frame is sent.

The first sending unit is adapted to send a data frame to the corresponding queue with a buffer status meeting a requirement according to a querying result of the first querying unit.

An apparatus with a multi-queue flow control function includes a second receiving unit, a second updating unit, a control frame generating unit, and a second sending unit.

The second receiving unit is adapted to receive data frames sent by an opposite end.

The second updating unit is adapted to update buffer status information of each queue according to the received data frames and a processed data frame situation.

The control frame generating unit is adapted to generate a flow control frame including buffer status information of each queue.

The second sending unit is adapted to send the flow control frame to the opposite end.

A multi-queue flow control system includes a sending device and a receiving device.

The sending device is adapted to update buffer status information of each queue according to a received flow control frame, query the buffer status information of each queue, and send data frames to the corresponding queue with a buffer status meeting a requirement.

The receiving device is adapted to receive the data frames sent by the sending device, update buffer status information of each queue according to the received data frames and a processed data frame situation, generate the flow control frame including buffer status information of each queue, and send the flow control frame to the sending device.

In the multi-queue flow control method according to an embodiment of the present invention, the receiving end informs the current buffer status of each queue to the sending end by means of sending a flow control frame including the buffer status information of each queue to the sending end, so that the sending end stores and updates buffer status information of each queue according to the flow control frame, queries the buffer status of each queue before sending a data frame to each queue, continues to send the data frame to a queue meeting the sending requirement, and stops sending the data frame to a queue not meeting the sending requirement. Through this manner, the multi-queue flow control method of the present invention effectively controls the transmission of data frames to each queue, so as to realize the flow control for a plurality of queues.

In the multi-queue flow control system according to an embodiment of the present invention, the receiving device informs the current buffer status of each queue to the sending device by sending the flow control frame including the buffer status information of each queue to the sending device, so that the sending device stores and updates buffer status information of each queue according to the flow control frame, queries the buffer status of each queue before sending the data frame to each queue. The sending device continues to send the data frame to the receiving device as for a queue meeting the sending requirement, and stops sending the data frame to the receiving device as for a queue not meeting the sending requirement. The system can effectively control the transmission of data frames to each queue, so as to realize the flow control for a plurality of queues.

### BRIEF DESCRIPTION OF THE DRAWINGS

The present invention becomes more fully understood from the detailed description given herein below for illustration only, in which:
FIG. 1 is a schematic view of a PAUSE frame format in the prior art;
FIG. 2 is a schematic view of a flow control method using a PAUSE frame in the prior art;
FIG. 3 is a flow chart of a multi-queue flow control method according to an embodiment of the present invention;
FIG. 4 is a schematic view of a frame format in a flow control according to an embodiment of the present invention;
FIG. 5 is a flow chart of a multi-queue flow control method according to an embodiment of the present invention, which periodically sends a flow control frame;
FIG. 6 is a flow chart of a multi-queue flow control method according to an embodiment of the present invention, which triggers to send a flow control frame through a status change;
FIG. 7 is a schematic view of a flow control method that triggers to send a flow control frame according to the embodiment of the present invention;
FIG. 8 is a structural block diagram of an apparatus with a multi-queue flow control function according to an embodiment of the present invention;
FIG 9 is a structural block diagram of another apparatus with a multi-queue flow control function according to an embodiment of the present invention;
FIG. 10 is a structural block diagram of still another apparatus with a multi-queue flow control function according to an embodiment of the present invention; and
FIG 11 is a block diagram of a multi-queue flow control system according to an embodiment of the present invention.

### DETAILED DESCRIPTION OF THE EMBODIMENTS

In an embodiment of the present invention, a multi-queue flow control method, a multi-queue flow control system, and a multi-queue flow control apparatus, applicable to a full-duplex Ethernet, are provided, in which a flow control frame reflecting buffer statuses of a plurality of queues is customized, a receiving device informs a current buffer status of each queue of itself to a sending device by sending the flow control frame, and the sending device stops sending a data frame to an overflowing queue according to the flow control frame.

The sending device in the embodiments of the present invention may also be taken as a receiving device, and correspondingly the receiving device in the embodiments of the present invention may also be taken as a sending device. That is to say, the devices in the embodiments of the present invention are considered with respect to the transmission or receiving of a data frame, i.e., a sending device or a receiving device of a data frame. During practical applications, generally, one device may have both data frame sending function and data frame receiving function.

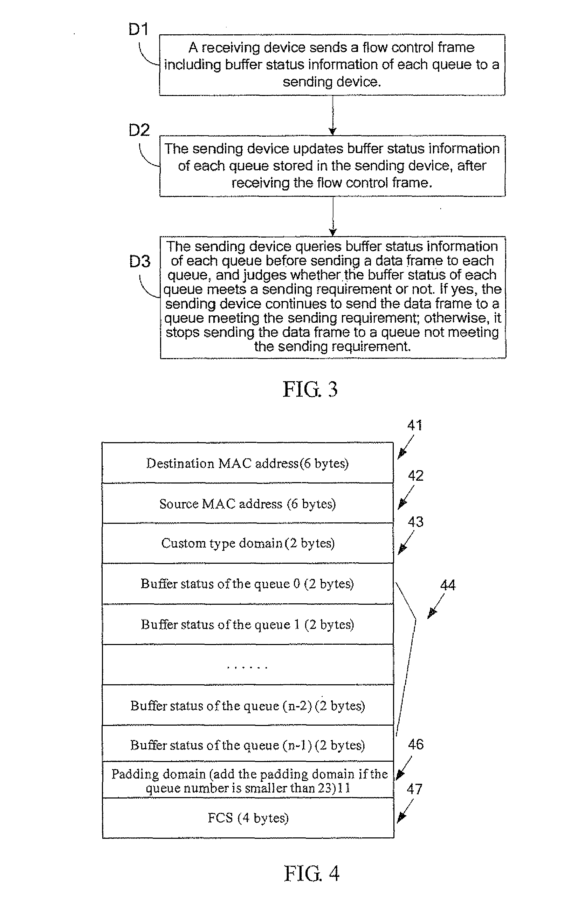

FIG. 3 is a flow chart of a multi-queue flow control method according to an embodiment of the present invention. The method includes the following steps.
D1. A receiving device sends a flow control frame including buffer status information of each queue to a sending device.
D2. The sending device updates buffer status information of each queue stored in the sending device, after receiving the flow control frame.
D3. The sending device queries buffer status information of each queue before sending a data frame to each queue, and judges whether the buffer status of each queue meets a sending requirement or not. If yes, the sending device continues to send the data frame to a queue meeting the sending requirement; otherwise, it stops sending the data frame to a queue not meeting the sending requirement.

In order to have a further understanding of the present invention, the technical solution is described below in detail through the specific embodiment.

FIG. 4 is a schematic view of a flow control frame format according to an embodiment of the present invention.

Being different from the PAUSE frame, the flow control frame defined in the embodiment of the present invention reflects flow control information of random n (n is greater than 1) queues, the flow control information of each queue occupies 2 bytes in a frame payload, and the customized flow control frame format is described as follows.

A destination MAC address 41 is an MAC address of the sending device.

A source MAC address 42 is a unicast address of the receiving device.

A custom type domain 43 is a frame type that is not applied currently, for example, 0xffff etc.

In a buffer status domain of each queue 44, each queue has the flow control information of 2 bytes represented by a buffer status thereof, which may be a residual buffer byte number, and may also be a full/empty buffer status.

In a padding domain 46, the queue number is not determined, so the frame length is not determined. If the queue number is smaller than 23, it is necessary to add the padding domain to enable the frame length to reach 64 bytes; and if the queue number is larger than or equal to 23, it is not necessary to add the padding domain, and the frame length equals to 64+ (Queue number-23)*2.

FCS 47 is 4 bytes.

The buffer status in the embodiment of the present invention includes a residual buffer ratio or a full/non-full buffer status.

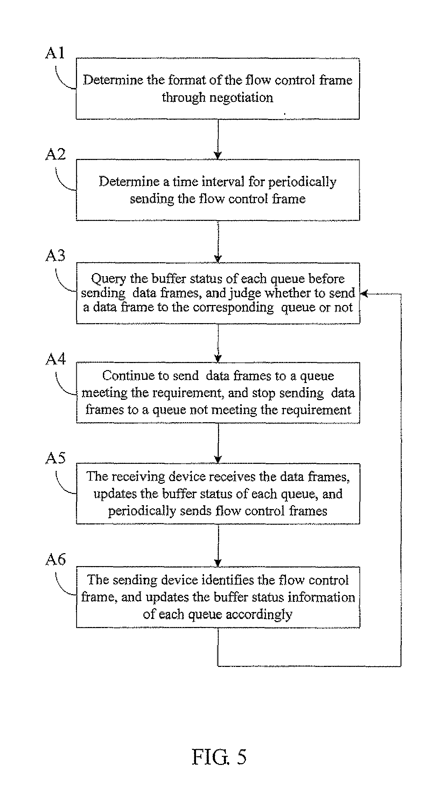

FIG. 5 is a flow chart of a multi-queue flow control method according to an embodiment of the present invention, which periodically sends a flow control frame. The method includes the following steps.
A1. The sending device and the receiving device determine the detailed format of the flow control frame through negotiation.
   Particularly, when two devices supporting the multi-queue flow control function are interconnected, before a data frame is transceived, it is firstly necessary to determine the supported queue number, so as to determine the frame length of the flow control frame. For example, if the queue number is 20, the frame length is 64, including the padding domain of 6 bytes; and if the queue number is 24, the frame length is 66, without the padding domain. In addition, it is necessary to specify the type domain of the flow control frame, and the frame type is an MAC frame type that has not been used so far, for example, 0xffff. It is further necessary to specify the manner for representing the buffer status of the queue, in which the residual buffer ratio or full/non-full buffer status is selected for representation. In the embodiment of the present invention, the residual buffer ratio is adapted to represent the buffer status.
A2. A time interval for periodically sending the flow control frame is determined.
   As for a flow control mechanism periodically sending a customized flow control frame, the time interval for periodically sending the flow control frame needs to be determined according to a bandwidth, a buffer capacity of each queue, and a response time to the flow control frame.
   The calculation of the time interval is described as follows.
   The bandwidth of the whole port is 1 Gbps (1 gigabit per second), and among the plurality of queues, the queue with the minimum buffer has a buffer of 64K bytes. Under an extreme situation, the sending device sends a data frame to the queue with the minimum buffer at a full rate of 1Gbps, and the time required for filling up the queue is 64K*8/1G=512 µs, thereby calculating the time interval required for sending the flow control frame based upon this time. In order to avoid the buffer overflow caused by not sending the flow control frame in time or not making a response to the flow control frame in time, the time interval for sending the flow control frame may be set as 1/4 of the time required for filling up the buffer, i.e., 128 µs.
   The initial configuration of the device further includes allocating different buffer spaces for data frames of the plurality of queues in the receiving device. In the sending device, an initial status of one residual buffer space is maintained. The initial status may be set according to the practical buffer of each queue in the receiving device, and alternatively, a default initial value may be set firstly, and then updated when receiving the flow control frame.
A3. The sending device queries the buffer status of each queue before sending data frames, and judges whether to send a data frame to the corresponding t queue or not.
A4. The sending device continues to send data frames to a queue meeting the requirement, and stops sending data frames to a queue not meeting the requirement.
   The sending device queries the buffer status of each queue before sending the data, and if the residual buffer ratio of a certain queue is low, for example, the residual buffer is insufficient for receiving one frame with the largest frame length, i.e., 1.5K bytes, the sending device stops sending the data frame to the queue, but only sends the data frame to the queue with sufficient residual buffer.
   In the embodiment of the present invention, it is judged whether to send the data frame or not according to the residual buffer ratio of the queue. It can be understood that, according to practical requirements, it is possible to set the detailed residual buffer ratio as the reference for judging whether to send the data frame to each queue or not. For example, if the buffer capacity of a certain queue of the receiving device is 100K bytes, the residual buffer ratio of 5%, i.e., 5K bytes, may be set as the reference for judging whether to send the data frame to each queue or not. If it is queried that the residual buffer ratio of the queue is lower than 5K, the sending device stops sending the data frame to the queue.
   When the data frame is sent this time, the residual buffer of the certain queue is insufficient, so that the data frame to the queue cannot be sent. Before the receiving device sends the flow control frame once again, the queue with the insufficient buffer may be processed by the system, the residual buffer thereof is increased, and the residual buffer ratio meets the condition for sending the data frame to the queue. Then, the receiving device informs the updated buffer status to the sending device, and the sending device sends the data frame to the queue when organizing the next transmission of data frames to the queues.
A5. The receiving device receives data frames and updates the buffer status of each queue according to the received data frames and processed data frame situation, and meanwhile periodically sends the customized flow control frames according to the pre-calculated time interval.
   The process of calculating the time interval can be obtained with reference to Step A2.
A6. The sending device detects the customized flow control frame from the receiving device, in which the detecting manner is to identify the flow control frame through a pre-set frame type, and updates the buffer status of each queue stored in the sending device according to the content of the flow control frame after receiving the flow control frame.
   When data frames are sent to a plurality of queues, Step A3 is continued.
   The above embodiment of the present invention is especially suitable for the situation that there are a lot of queues, in which the flow control frame is periodically sent, thereby improving the working efficiency.

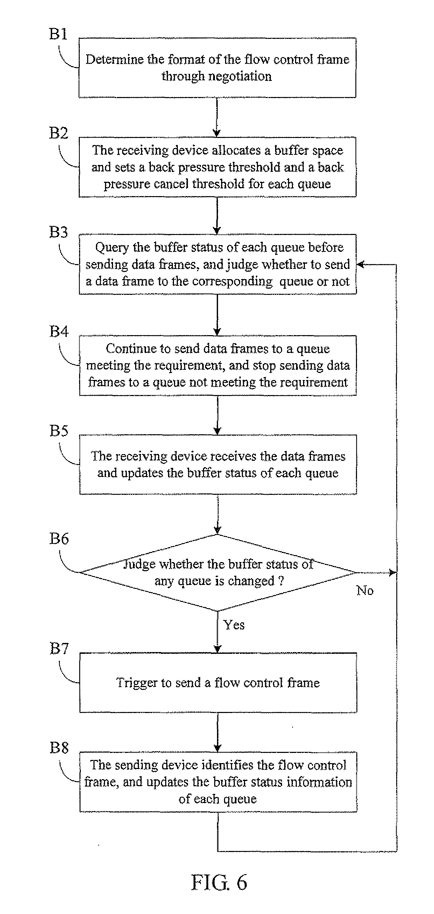

FIG 6 is a flow chart of a multi-queue flow control method according to an embodiment of the present invention, which triggers to send a flow control frame through a status change. The method includes the following steps.
B1. The sending device and the receiving device determine a format of the flow control frame through negotiation.
   The process of negotiating about the format can be obtained with reference to Step A1 of the above embodiment, and in the embodiment of the present invention, the full/non-full buffer status is adapted to represent the buffer status.
   This embodiment of the present invention is more suitable for the situation with less queues and it is only required to control stop-start. As for the mechanism of sending the flow control frame through an event triggering manner, a sending frequency of the flow control frame may be not uniform, and particularly, the statuses of several queues may be frequently changed, so as to frequently trigger the flow control frame; and the statuses of several queues may not be changed for a long time, so there is no flow control frame. As for the mechanism of sending the flow control frame through the queue status update triggering manner, it is not necessary to wait for a time interval of a timer as the manner of periodically sending the low control frame, so the response to the flow control is quite timely.
B2. The receiving device allocates a buffer space and sets a back pressure threshold and a back pressure cancel threshold for each queue.
   A certain buffer space is allocated for each queue, and meanwhile, according to the bandwidth and the process capability of each queue, the back pressure threshold and the back pressure cancel threshold are set. The setting of the two thresholds aims at preventing the queue status from quickly changing between the full status and the no-full status to trigger to send a great number of flow control frames. The two thresholds divide the whole buffer into three regions. When an occupation ratio of the buffer is smaller than the back pressure cancel threshold, the buffer status is non-full; when the occupation ratio of the buffer is larger than or equal to the back pressure threshold, the buffer status is full; when the occupation ratio of the buffer is in an intermediate region between the two thresholds, the buffer status is not changed; when the occupation ratio of the buffer exceeds the back pressure threshold from the intermediate region, the buffer status is changed to be full; and when the occupation ratio of the buffer is reduced from the intermediate region to become lower than the back pressure cancel threshold, the buffer status is changed to be non-full.
   In the receiving device, different buffer spaces need to be allocated for data frames of a plurality of queues and a back pressure (full status) threshold and a cancel back pressure (non-full status) threshold need to be set for each queue. In the sending device, an initial status of one residual buffer space needs to be maintained. As for the initial status, a default initial value may be set that all the queues allow the transmission of data frames, which may be updated after the flow control frame is received.
B3. The sending device queries the buffer status of each queue before sending data frames, and judges whether to send a data frame to the corresponding queue or not.
B4. The sending device continues to send data frames to a queue meeting the requirement, and stops sending data frames to a queue not meeting the requirement.
   The sending device queries the buffer status of each queue before sending the data frame of each queue, if the queue is in the full status, the sending device does not send the data frame to the queue, and if the queue is in the non-full status, the sending device sends the data frame to the queue.
   When the data frame is sent this time, due to the full status of certain queue, the data frame to the queue cannot be sent. Before the receiving device sends the flow control frame once again, the queue with the full status may be processed by the system, and the buffer status thereof is changed to the non-full status. Then, the receiving device informs the updated buffer status to the sending device, and the sending device sends the data frame to the queue when organizing the next transmission of data frames to the queues.
B5. The receiving device receives the data frames of each queue, and updates the buffer status of each queue according to the received data frames and the processed data frame situation.
B6. The receiving device judges whether the buffer status of any queue is changed.
   The receiving device compares the buffer status with the two buffer thresholds. If the previous buffer status is non-full, and the new buffer occupation ratio is higher than the back pressure threshold, the receiving device updates the buffer status to be full, and triggers to send the customized flow control frame. If the previous buffer status is full, and the new buffer occupation ratio is lower than the back pressure cancel threshold, the receiving device updates the buffer status to be non-full, and triggers to send the customized flow control frame. If the buffer status of the queue is not changed, Step B3 is continued.
B7. When the buffer status of any of the queues is changed, a flow control frame is triggered to be sent.
   In the receiving device, the buffer status of the plurality of queues may be changed at the same time. Particularly, if the buffer status of a certain queue is changed to be full, and the buffer status of another queue is changed to be non-full, as for the events changing at the same time, it is only necessary to trigger the transmission of the flow control frame for one time, and the reason is that the customized flow control frame carries the buffer statuses of the plurality of queues.
B8. The sending device identifies the flow control frame and updates buffer status information of each queue accordingly.
   The sending device needs to continuously detect the customized flow control frame from the receiving device, in which the customized flow control frame is identified through the frame type. After receiving the flow control frame, the sending device updates the buffer status of each queue maintained by itself according to the content of the flow control frame. When data frames to the plurality of queues are sent, Step B3 is continued.

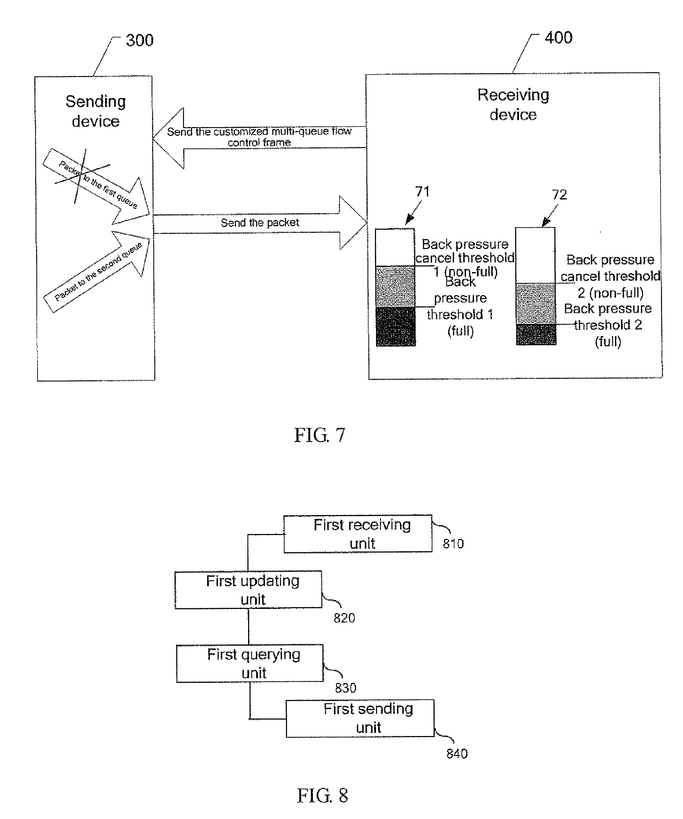

FIG. 7 is a schematic view of a flow control method that triggers to send a flow control frame according to the embodiment of the present invention.

In a receiving device 400, a buffer threshold is respectively set for a first queue 71 and a second queue 72. The receiving device 400 works together with a sending device 300 to realize the flow control by controlling stop-start of an event trigger. After the system is started, the sending device 300 starts to send data frames of the first queue 71 and the second queue 72 to the receiving device 400. When the buffer occupation ratio of the first queue 71 in the receiving device 400 reaches the buffer threshold, the receiving device 400 sends a flow control frame for informing the current buffer status of each queue to the sending device 300. Once detecting the flow control frame, the sending device 300 updates the buffer status of each queue maintained by itself according to the flow control frame, in which the buffer status of the first queue 71 is updated to be full. Before sending the data frame, the sending device 300 queries the status of each queue, stops sending the data frame to the first queue 71, but only sends the data frame to the second queue 72, thereby avoiding the buffer overflowing of the first queue 71 in the receiving device 400. When the data frame of the first queue 71 in the receiving device 400 is processed, and the buffer occupation ratio thereof is lower than the back pressure cancel threshold, the receiving device 400 sends a flow control frame indicating that the status of the first queue 71 is updated to be non-full, and thus, the sending device 300 continues to send the data frame to the first queue 71.

FIG. 8 is a structural block diagram of an apparatus with a multi-queue flow control function according to an embodiment of the present invention. Referring to FIG. 8, the apparatus includes a first receiving unit 810, a first updating unit 820, a first querying unit 830, and a first sending unit 840.

The first receiving unit 810 is adapted to receive a flow control frame including buffer status information of each queue.

The first updating unit 820 is adapted to update stored buffer status information of each queue according to the received flow control frame.

The first querying unit 830 is adapted to query buffer status information of each queue before the first sending unit 840 sends data frames.

The first sending unit 840 is adapted to send the data frame to the corresponding queue with a buffer status meeting a requirement as queried by the first querying unit 830.

The buffer status information is a residual buffer, or full or non-full buffer status information.

In the practical application, the data frame sending apparatus in the embodiment of the present invention may be configured independently, and may also be disposed in an existing device.

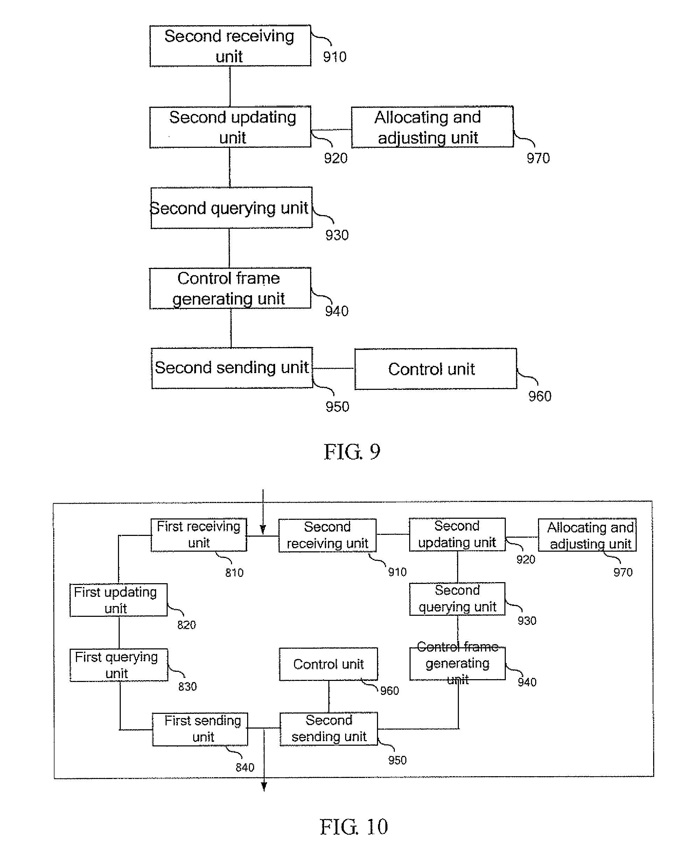

FIG. 9 is a structural block diagram of an apparatus with a multi-queue flow control function according to an embodiment of the present invention. Referring to FIG. 9, the apparatus includes a second receiving unit 910, a second updating unit 920, a second querying unit 930, a control frame generating unit 940, and a second sending unit 950.

The second receiving unit 910 is adapted to receive data frames of each queue.

The second updating unit 920 is adapted to update buffer status information of each queue according to the data frames received by the second receiving unit 910 and a processed data frame situation.

The second querying unit 930 is adapted to query buffer status information of each queue.

The control frame generating unit 940 is adapted to generate a corresponding flow control frame when it is queried by the second querying unit 930 that the buffer status information of a certain queue is changed.

The second sending unit 950 is adapted to send the flow control frame generated by the control frame generating unit 940.

In the above embodiment, the present invention may further include a control unit 960, adapted to control the second sending unit 950 to periodically send flow control frames. In the above embodiment, the present invention may further include an allocating and adjusting unit 970, adapted to allocate or adjust a buffer space for each queue, after the buffer status information of each queue is updated by the second updating unit 920.

FIG. 10 is a structural block diagram of an apparatus with a multi-queue flow control function according to an embodiment of the present invention. Referring to FIG. 10, the apparatus includes a first receiving unit 810, a first updating unit 820, a first querying unit 830, a first sending unit 840, a second receiving unit 910, a second updating unit 920, a second querying unit 930, a control frame generating unit 940, and a second sending unit 950.

The first receiving unit 810 is adapted to receive a flow control frame including buffer status information of each queue.

The first updating unit 820 is adapted to update stored buffer status information of each queue according to the received flow control frame.

The first querying unit 830 is adapted to query buffer status information of each queue before the first sending unit 840 sends data frames.

The first sending unit 840 is adapted to send the data frames to the corresponding queue with a buffer status meeting a requirement as queried by the first querying unit 830.

The second receiving unit 910 is adapted to receive the data frames of each queue sent by an opposite end.

The second updating unit 920 is adapted to update buffer status information of each queue according to the data frames received by the second receiving unit 910 and a processed data frame situation.

The second querying unit 930 is adapted to query buffer status information of each queue.

The control frame generating unit 940 is adapted to generate a corresponding flow control frame when it is queried by the second querying unit 930 that the buffer status information of a certain queue is changed.

The second sending unit 950 is adapted to send the flow control frame generated by the control frame generating unit 940 to the opposite end.

In the above embodiment, the present invention may further include a control unit 960, adapted to control the second sending unit 950 to periodically send flow control frames. In the above embodiment, the present invention may further include an allocating and adjusting unit 970, adapted to allocate or adjust a buffer space for each queue after the buffer status information of each queue is updated by the second updating unit 920.

In the practical application, the apparatus with the multi-queue flow control function in the embodiment of the present invention may be configured independently, and may also be disposed in the existing sending device or receiving device. In addition, the apparatus with the multi-queue flow control function in the embodiment of the present invention may also be disposed in one device.

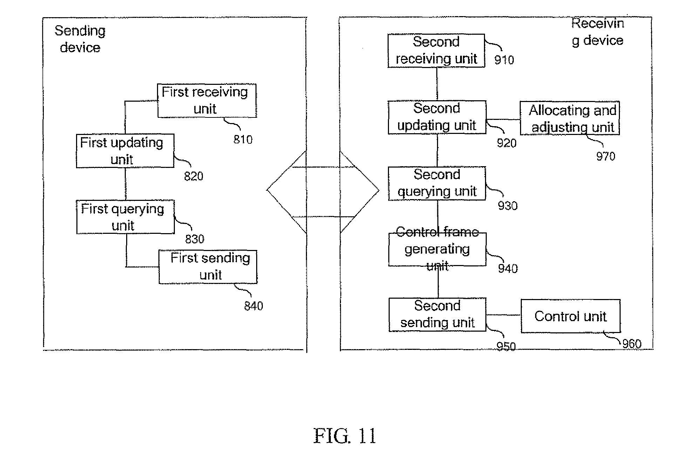

FIG. 11 is a block diagram of a multi-queue flow control system according to an embodiment of the present invention. Referring to FIG. 11, the system includes a sending device and a receiving device.

In the sending device, the first receiving unit 810 receives a flow control frame including buffer status information of each queue sent by the second sending unit 950. Then, the first updating unit 820 updates stored buffer status information of each queue according to the flow control frame received by the first receiving unit 810. The first querying unit 830 queries buffer status information of each queue before the first sending unit 840 sends a data frames. Finally, the first sending unit 840 sends the data frame to the corresponding queue meeting a requirement.

In the receiving device, the second receiving unit 910 receives the data frame of each queue sent by the first sending unit 850 of the sending device. Then, the second updating unit 920 updates buffer status information of each queue according to the received data frame and the processed data frame situation. The second querying unit 930 queries buffer status information of each queue. When it is queried by the second querying unit 930 that the buffer status information of a certain queue is changed, the control frame generating unit 940 generates a corresponding flow control frame. Finally, the second sending unit 950 sends the flow control frame generated by the control frame generating unit 940 to the sending device. During this process, the transmission time of the second sending unit 950 may be controlled by the control unit 960. After the second updating unit 920 has updated the buffer status information of each queue, the allocating and adjusting unit 970 allocates or adjusts a buffer space for each queue.

In the multi-queue flow control method according to the embodiment of the present invention, the receiving device informs the current buffer status of each queue of itself to the sending device by means of sending the flow control frame including the buffer status information of each queue to the sending device, and the sending device stores the buffer status, and queries the buffer status of each queue before sending the data frame to each queue, so as to continue to send the data frame to the queue meeting the sending requirement, and to stop sending the data frame to the queue not meeting the sending requirement. Through this manner, it is possible to control the transmission of the data frame to each queue, thereby realizing the multi-queue flow control.

In addition, it should be noted that, those skilled in the art may understand that, all or a part of the steps in the method for realizing the embodiment may be finished by hardware relevant to programs and instructions, and the programs may be stored in computer readable storage media, and the storage media include, for example, ROM/RAM, magnetic disc, or optical disc.

In the multi-queue flow control system according to the embodiment of the present invention, the receiving device informs the current buffer status of each queue of itself to the sending device by means of sending the flow control frame including the buffer status information of each queue to the sending device, and the sending device stores and updates the buffer status information of each queue according to the flow control frame, queries the buffer status of each queue before sending the data frame to each queue. The sending device continues to send the data frame to the receiving device as for a queue meeting the sending requirement, and stops sending the data frame to the receiving device as for a queue not meeting the sending requirement. The system of the present invention effectively controls the transmission of the data frame to each queue in the receiving device, thereby realizing the multi-queue flow control.

Furthermore, in the embodiment of the present invention, it is possible to represent the buffer status by the residual buffer ratio or the full/non-full buffer status. Both the above two manners of representing the buffer status can realize the multi-queue flow control. During the implementation, to the two manners are selected according to the practical design situations.

Furthermore, in the embodiment of the present invention, the multi-queue flow control is realized by periodically sending the flow control frame. The receiving device informs the current residual buffer ratio of each queue of itself to the sending device by periodically sending the flow control frame to the sending device. The sending device judges whether to send a data frame to the corresponding queue or not according to the residual buffer ratio, so that both the sending device and the receiving device operate together according to the time cycle, thereby further improving the processing performance of the multi-queue flow control.

Furthermore, in the embodiment of the present invention, the flow control frame is triggered to be sent through, for example, the buffer status changing event, so as to realize the flow control. When the buffer status of the queue of the receiving device is changed, the receiving device is triggered to send the flow control frame including the full/non-full buffer status information of each queue, and the sending device judges whether to send a data frame to the corresponding queue or not according to the full/non-full status information of the queue in the flow control frame. The embodiment of the present invention is more suitable for the situation that there are less queues and the bluffer status of the queues are not frequently changed.

The multi-queue flow control method provided by the present invention has been described above in detail. In the present invention, the principles and implementing manners of the present invention have been demonstrated through several specific examples. The descriptions of the above embodiments are only intended to be helpful to understand the method and core spirits of the present invention. It will be apparent to those skilled in the art that various modifications and variations can be made to the structure of the present invention without departing from the scope or spirit of the invention. Therefore, the content of the specification of the invention does not restrict the scope of the invention.

## Claims

1. A multi-queue flow control method, comprising:
sending, by a receiving device, a flow control frame comprising buffer status information of each queue to a sending device;
updating, by the sending device, the buffer status information of each queue stored in the sending device, after receiving the flow control frame; and
querying, by the sending device, the buffer status information of each queue before sending data frames, continuing to send data frames to the corresponding queue with a buffer status meeting a requirement, and stopping sending data frames to the corresponding queue with a buffer status not meeting the requirement.

2. The method according to claim 1, wherein the buffer status is a residual buffer ratio.

3. The method according to claim 2, wherein the receiving device periodically sends the flow control frame comprising the buffer status information of each queue to the sending device, and determines a time interval as a period before periodically sending the flow control frame.

4. The method according to claim 1, wherein the buffer status is a full/non-full status.

5. The method according to claim 4, wherein the sending, by the receiving device, the flow control frame comprising buffer status information of each queue to the sending device further comprises: triggering the receiving device to send the flow control frame comprising full/non-full buffer status information of each queue to the sending device when a buffer status of a queue of the receiving device is changed, and the buffer status thereof is changed from a non-full buffer status to a full buffer status, or from the full buffer status to the non-full buffer status.

6. The method according to any one of claims 1 to 5, wherein before the sending, by the receiving device, the flow control frame comprising buffer status information of each queue to the sending device, the sending device and the receiving device negotiate with each other to determine information of the flow control frame.

7. The method according to claim 6, wherein the flow control frame comprises a destination media access control MAC address, a source media access control MAC address, a custom type domain, a buffer status domain of each queue, a padding domain, and a frame check sequence (FCS).

8. The method according to claim 7, wherein before the sending, by the receiving device, the flow control frame comprising buffer status information of each queue to the sending device, the method further comprises allocating, by the receiving device, a buffer space for each queue.

9. A multi-queue flow control method, comprising:
receiving a flow control frame comprising buffer status information of each queue;
updating the buffer status information of each queue according to the flow control frame; and
querying the buffer status information of each queue before sending data frames, continuing to send data frames to the corresponding queue with a buffer status meeting a requirement, and stopping sending data frames to the corresponding queue with a buffer status not meeting the requirement.

10. The method according to claim 9, wherein the queue with the buffer status meeting the requirement satisfies a random condition as follows:
a residual buffer ratio of the queue is higher than a set threshold; or
a buffer status of the queue is changed from a non-full status to a full status.

11. The method according to claim 10, wherein the flow control frame is periodically sent.

12. A multi-queue flow control method on a data frame receiving side, comprising:
receiving data frames;
updating buffer status information of each queue according to the received data frames and a processed data frame situation; and
sending a flow control frame comprising buffer status information of each queue.

13. The method according to claim 12, wherein the flow control frame comprising buffer status information of each queue is sent when buffer status information of a queue is changed after querying buffer status information of each queue.

14. The method according to claim 13, wherein the change of the buffer status information of the queue satisfies a random condition as follows:
a residual buffer ratio of the queue is lower than a set threshold;
a buffer status of the queue is changed from a non-full status to a full status; or
the buffer status of the queue is changed from the full status to the non-full status.

15. The method according to claim 12, wherein the flow control frame comprising buffer status information of each queue is periodically sent.

16. The method according to claim 12, wherein before receiving the data frame, the method further comprises determining information of the flow control frame through negotiation.

17. The method according to claim 12, wherein after updating the buffer status information of each queue, the method further comprises allocating or adjusting a buffer space for each queue.

18. An apparatus with a multi-queue flow control function, comprising:
a first receiving unit, adapted to receive a flow control frame comprising buffer status information of each queue;
a first updating unit, adapted to update buffer status information of each queue according to the flow control frame;
a first querying unit, adapted to query buffer status information of each queue before data frames are sent; and
a first sending unit, adapted to send the data frames to the corresponding queue with a buffer status meeting a requirement according to a querying result of the first querying unit.

19. The apparatus according to claim 18, further comprising:
a second receiving unit, adapted to receive data frames sent by an opposite end;
a second updating unit, adapted to update buffer status information of each queue according to the received data frames and a processed data frame situation;
a control frame generating unit, adapted to generate a flow control frame comprising buffer status information of each queue; and
a second sending unit, adapted to send the flow control frame generated by the control frame generating unit to the opposite end.

20. The apparatus according to claim 19, further comprising a second querying unit, adapted to query buffer status information of each queue, and trigger the control frame generating unit to generate the flow control frame when the buffer status information of any queue is changed.

21. The apparatus according to claim 19 or 20, further comprising a control unit, adapted to control the second sending unit to periodically send the flow control frame.

22. The apparatus according to claim 19 or 21, further comprising an allocating and adjusting unit, adapted to allocate or adjust a buffer space for each queue.

23. An apparatus with a multi-queue flow control function, comprising:
a second receiving unit, adapted to receive data frames sent by an opposite end;
a second updating unit, adapted to update buffer status information of each queue according to the received data frames and a processed data frame situation;
a control frame generating unit, adapted to generate a flow control frame comprising buffer status information of each queue; and
a second sending unit, adapted to send the flow control frame to the opposite end.

24. The apparatus according to claim 23, further comprising a second querying unit, adapted to query the buffer status information of each queue, and trigger the control frame generating unit to generate the flow control frame when the buffer status information of any queue is changed.

25. The apparatus according to claim 23 or 24, further comprising a control unit, adapted to control the second sending unit to periodically send the flow control frame.

26. The apparatus according to claim 23 or 25, further comprising an allocating and adjusting unit, adapted to allocate or adjust a buffer space for each queue.

27. A multi-queue flow control system, comprising:
a sending device, adapted to update buffer status information of each queue according to a received flow control frame, query the buffer status information of each queue, and send a data frame to a corresponding queue with a buffer status meeting a requirement; and
a receiving device, adapted to receive the data frame sent by the sending device, update the buffer status information of each queue according to the received data frame and a processed data frame situation, generate a flow control frame comprising the buffer status information of each queue, and send the flow control frame to the sending device.

28. The system according to claim 27, wherein when it is queried that the buffer status information of any queue is changed, the receiving device generates the flow control frame.

29. The system according to claim 27, wherein the receiving device periodically sends the flow control frame to the sending device.
